# EUROPEAN PATENT APPLICATION

(11) **EP 4 647 198 A1**
(43) Date of publication of application: **12.11.2025**
(21) Application number: 25174761.4
(22) Date of filing: 07.05.2025
(51) Int. Cl.: B23K 9/02, B23K 9/04, B23K 9/095, B23K 9/127, B23K 9/173, B23K 37/02, B33Y 50/02

(54) **END EFFECTOR ASSEMBLY, SYSTEMS AND METHODS FOR WEAVING IN ADDITIVE MANUFACTURING**

(30) Priority: 07.05.2024 US 202463643831 P
(71) Applicant: Relativity Space, Inc., Long Beach, CA 90807 (US)
(72) Inventor: BOPP, Jonathan, Long Beach, 90807 (US); HUYNH, Trung, Long Beach, 90807 (US); SANSONE, Ellis, Long Beach, 90807 (US); BERMUDEZ, Adam, Long Beach, 90807 (US); MUNGO, Scott, Long Beach, 90807 (US); STENGLINE, Erik Daniel, Long Beach, 90807 (US); ODEN, Gregory Nicholas, Long Beach, 90807 (US); CEPERO, Adam, Long Beach, 90807 (US)
(74) Representative: EIP

(57) **Abstract**

Systems and methods for implementing weaving in additive manufacturing are described. The weaving can be controlled by a localized system to achieve fine movement accuracy. The system can include a motor to move the print head in a multi axes motion. The system can improve print consistency and quality.

## Description

### CROSS-REFERENCE TO RELATED APPLICATIONS

The current application claims priority under 35 U.S.C. 119(e) to U.S. Provisional Application No. 63/643,831, entitled "Systems and Methods for Weaving in Additive Manufacturing", filed May 7, 2024, the disclosures of which are incorporated herein by reference in their entireties.

### FIELD OF THE INVENTION

This disclosure generally refers to systems and methods for weaving in additive manufacturing.

### BACKGROUND

Weaving is an arc welding technique that involves moving the electrode wire in a weave pattern to fill a wide joint or weld thick metals. Weaving can move the electrode wire in a side-to-side pattern in a controlled manner, creating various patterns as needed. Weaving patterns allow welders to cover a larger area of the joint in less time, making it a faster method for completing the welding process. Weaving also helps distribute heat evenly across the joint, preventing the metal from becoming overheated or distorted. Furthermore, weaving patterns contribute to a uniform and consistent weld, which can improve its strength and durability.

Wire Arc Additive Manufacturing (WAAM) is a metal-part manufacturing technology that uses directed energy deposition and arc welding to create 3D parts by depositing layers of metal. WAAM is utilized in the manufacturing of industrial size components in aerospace, automotive, and marine industries. Using weaving patterns in WAAM can optimize print parameters and/or improve print quality such as minimizing surface roughness.

### SUMMARY OF THE INVENTION

Systems and methods in accordance with some embodiments of the invention are directed to implementing weaving patterns in additive manufacturing.

Some embodiments include an additive manufacturing system, comprising: a robotic actuator; and an end effector assembly mounted to the robotic actuator, the end effector assembly comprising: an end effector, the end effector comprising: a modular interface comprising a set of connection points, the set of connection points arranged around a perimeter of a modular interface central axis; and a welding torch, wherein an end point of the welding torch is positioned approximately along the modular interface central axis; a motor configured to control a movement of the end effector; wherein the movement of the end effector is decoupled from a movement of the robotic actuator such that the end effector assembly has its own degree of freedom.

In some embodiments, the end effector assembly is configured to print a plurality of weave patterns with an accuracy of less than 10 millimeters.

In some embodiments, end effector assembly has a degree of freedom on one axis, wherein the axial direction is a bulk weave axial direction.

In some embodiments, the end effector assembly further comprises a rail and the motor controls the movement of the end effector along the rail.

In some embodiments, the end effector assembly has a degree of freedom on two axes, wherein a first axial direction is a bulk weave axial direction and a second axial direction is a direction of travel of a print part of the additive manufacturing system.

In some embodiments, the end effector assembly further comprises two rails and the motor controls the movement of the end effector along the two rails.

In some embodiments, the end effector assembly has a degree of freedom on three axes, wherein a first axial direction is a bulk weave axial direction, a second axial direction is a direction of travel of a print part of the additive manufacturing system, and a third axial direction controls a distance between the welding torch and a print part of the additive manufacturing system.

In some embodiments, the welding torch is a hot wire torch comprising a hot wire torch endpoint; and one or more sensors fixedly attached via the set of connection points to the modular interface, wherein the one or more sensors are positioned to generate data based on observations of an observation position, wherein the observation position is offset relative to the hot wire torch endpoint.

In some embodiments, one or more of the set of connection points are configured to connect with one or more devices selected from the group consisting of: a hot wire torch, a cold wire torch, a sensor, a camera, a tool, a welding camera, an infrared camera, a visible light camera, a laser sensor, and a sensor to measure geometrical dimensions of a part.

In some embodiments, the end effector assembly further comprises a control assembly, wherein the control assembly comprising: memory; and a processor, the processor is configured to: receive a set of print instructions for weaving from the memory; send the set of print instructions to the end effector assembly; and cause the motor to move the end effector assembly.

Some embodiments include an end effector assembly for an additive manufacturing system, comprising: an end effector, the end effector comprising: a modular interface comprising a set of connection points, the set of connection points arranged around a perimeter of a modular interface central axis; and a welding torch, wherein an end point of the welding torch is positioned approximately along the modular interface central axis; a motor configured to control a movement of the end effector; wherein the movement of the end effector is decoupled from a movement of a robotic actuator that the end effector assembly is configured to be attached to such that the end effector assembly has its own degree of freedom.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description will be more fully understood with reference to the following figures, which are presented as embodiments of the invention and should not be construed as a complete recitation of the scope of the invention, wherein:
FIG 1A illustrates a trace map of a robot following a weave path in accordance with prior art.
FIG 1B illustrates a trace map of a robot incorporating a weave axis system in accordance with an embodiment.
FIGs 2A and 2B illustrate various weaving patterns the weave axis system can achieve in accordance with an embodiment.
FIG 3A through 3C illustrate various views of a one axis weave axis system in accordance with an embodiment.
FIG 4 illustrates a horizontal WAAM system incorporating a weave axis system in accordance with an embodiment.
FIGs 5A through 5B illustrate various views of a two axes weave axis system in accordance with an embodiment.
FIG. 6 illustrates a computer system for the additive manufacturing system in accordance with an embodiment.
FIGs. 7A through 7I illustrate weaving at various weave speeds and poses of the weave axis system in accordance with an embodiment.
FIGs. 8A through 8G illustrate weaving at various weave speeds and poses of the weave axis system in accordance with an embodiment.

### DETAILED DESCRIPTION OF THE INVENTION

For purposes of the disclosure, additive manufacturing (AM), printing, and/or 3D printing refers to a computer-controlled process that creates three dimensional objects by adding layers of material (layer-by-layer) to create the final object. Additive manufacturing differs from conventional manufacturing, which extensively uses subtractive processes, in which layers of materials are removed from a workpiece to construct the desired part. Example AM processes include wire arc additive manufacturing (WAAM), directed energy deposition (DED), laser metal deposition (LMD), fused deposition modeling (FDM), and material extrusion. Although the discussion below focuses on WAAM processes, it should be understood that any AM process that adds layers of material using a moving printing head can benefit from the techniques described herein.

WAAM typically involves using an energy source to create a weld pool and feeding a metal wire (feed material) into the weld pool by way of a printing head or printing head nozzle. Energy (namely, an electric current carried by the feed wire) is used to create the weld pool. The printing head, and subsequently the weld pool can be moved. As the printing head and the welding pool move, the trailing edge of the pool cools and solidifies. Through this process of gradually moving the printing head along a path can lead to a fully printed part.

The printing head (for example, a welding torch) can be controlled via robots during WAAM. In robotic manufacturing, an end effector assembly can be a device mounted to the end of a robotic actuator (for example, a robotic arm) designed to interact with the environment and perform manufacturing operations. The end effector assembly may also be referred to as end of arm tooling (EOAT). End effector assemblies can be configured to achieve improvements to speed, accuracy, precision, and part size in WAAM processes. During WAAM, the printing head can be attached to the end effector assembly of the printing robot. The control of the robot arm can control the position of the printing head and hence the weld pool.

A modular interface can be included in the end effector assembly. A modular interface can be a mechanical interface (also referred to herein as "interfaces") that can enable attachment and detachment of integrated electronics, sensors, infrared and visible light cameras, laser profile sensors, support for multiple hot and cold weld wires, multi axes positioning of cold wire or wires, local arc shielding for human observation, and localized fume extraction. (See, e.g. end effector assembly as described in PCT Application No. PCT/US2023/076486 filed October 10, 2023; the disclosure of which is incorporated by reference.)

The robotic actuator can have multiple-axis degrees of freedom. Six-axis robots are a type of articulated robot that is common for industrial manufacturing. They provide the desired flexibility, strength, and reach. Six-axis robots are able to move in the x, y, and z planes. In addition, they can perform roll, pitch, and yaw movements. This makes the movements of these robots similar to that of the human arm. Each axis represents an independent motion or degree of freedom, that allows a robotic arm to move to a programmed point.

The robotic actuator can work inside a robot cell. A robot cell, also referred to as a cell or a work cell, is a closed workspace that contains one or more programable robots, auxiliary tools, vision systems, and safety barriers.

The robotic actuator can have various poses. Robot poses can be used to describe the position and rotation of a robot's end effector assembly in the work cell. The pose can be a move or a motion in the x direction, in the y direction, and/or in the z direction, and a rotation or twist by an angle. The robot can be in a normal pose where the robot arm is in a neutral position. The robot can be in a tight (or compact) pose where the robot arm is extended shorter relative to the normal pose. The robot can be in a reach pose where the robot arm is extended further relative to the normal pose.

### Weaving in WAAM Processes

During WAAM processes, weaving can be used to build thickness when printing is in straight lines, or in other circumstances. In order to weave a weld, the printing robot (such as a six-axis robot, or a Kuka robot) needs to be moved back and forth. The robot moves so the print head moves, thereby weaving the welding. Conventionally, the control of weaving in WAAM processes is achieved via the control of the robot (or the movement of the robot).

The printing robots can influence various factors of the printing process. Robots for industrial size manufacturing are often not designed, or optimized, for fine weaving or moving minute distances (e.g., from about 2-3 mm to about 50 mm) for long periods of time, particularly when the arm is fully outstretched. The arm of the printing robots can weigh from about 1,200 lbs to about 2,000 lbs. The continuous weaving motion of a heavy arm may stress the motor. In addition, there is also lag that contributes to inaccuracy, depending on how fast or long the weave cycle is. When there is a significant lag, the robot tries to keep up but it's unable to hit the full scope of the requested weave. The accuracy of weaving in WAAM processes is poor and inconsistent due to the need to move the robots for weaving and due to the long printing hours that are needed to complete large-scale industrial parts.

Moreover, relying on direct robot motion to perform the weaving is fundamentally inefficient and imprecise. Six-axis industrial robots typically include three rotational joints and three translational axes (X, Y, Z), but weaving is generally constrained to the lowest rotational joint, often referred to as the shoulder joint. This joint controls large sections of the robot's arm and has to move a significant mass, resulting in substantial inertia. Consequently, weaving motions made with the shoulder joint tend to be slower and less precise, creating path distortions such as turning ideal straight lines into flattened ovals. These path distortions can vary in orientation relative to the part, unintentionally moving the printing head closer to or farther from the workpiece. This causes uneven buildup of material, leading to variable bead geometry, weak adhesion, and inconsistent mechanical properties.

Additionally, robot behaviors in different cells are inconsistent because every robot is physically and mechanically unique. Consequently, controlling robots in a standardized manner across cells is difficult. Even robots of the same model can behave differently due to calibration, maintenance history, and environmental factors. As a result, printing path and robot command codes, such as the welding parameters and motion commands, must be adjusted for each cell, and often re-tuned even within the same cell, such as for pose-to-pose variations. When the pose is compact, the robot is in a stiff position. When the arm is stretched out, it's weak and can't make the same weaving movements as it does in a compact pose. This leads to unpredictable variations in weld quality and geometry, depending on the current articulation of the robot.

These issues are compounded by the robot's significant mass and inertia. Movements, especially at transitions such as corners, are affected by the need to decelerate and accelerate the large mass of the robot's components. Compensating for the changing acceleration can often result in uneven velocity profiles, such as profiles that are slower near corners and faster along straight paths, which can further contribute to inconsistent material deposition. Depending on the robot's pose, the amount of inertia and resulting acceleration requirements can vary widely, further degrading motion precision. These dynamics introduce rotational and translational deviations that manifest as distortions in the final part.

Most industrial robots are not optimized or engineered for the continuous, high-frequency, small-amplitude oscillatory motion required in WAAM weaving. Using traditional industrial robots in this manner introduces mechanical stress, positional inaccuracies, and process instabilities, all of which can contribute to suboptimal part quality, increased wear on the robot, and limitations on achievable resolution in the deposited material. As a result, specialized automatic machines with precision weave control are needed to achieve the accuracy, repeatability, and throughput required in high-quality WAAM production.

Many embodiments provide weave axis systems for weaving while printing during additive manufacturing processes. The weave axis system is an end-effector assembly that substantially decouples weaving from the robot. As used herein, "substantially decoupled" and "decoupled" means that the weaving movement of the weave axis system are mechanically and operationally independent from the motion of the robotic actuator, such that the robot is not required to move in order to execute the weaving, and any reactive forces from the weave axis system are negligible with respect to the robot's pathing and stability.

Decoupling the robot from the weave axis system helps make the printing process agnostic to the robot, and even allows for use with alternatives to robotic actuators, such as a gantry system. In several embodiments, the weave axis system can be implemented as an end-effector and mounted to a robot actuator. In some embodiments, the weave axis system can be held via a gantry system. As the weave axis system has control over printing and weaving, it is able to print the same way with the same consistency, no matter which robot or gantry system is in use. Because the weave axis system provides its own degree of freedom, typically one, two, or three linear axes independent of the robot, the weave axis system can generate linear motion of the welding head without requiring coordinated motion of multiple rotary robot joints which is a departure from the traditional operation of 6-axis robotic systems, which cannot produce true linear motion in a single direction without activating multiple joints in combination.

In , many traditional systems without a dedicated weave axis system rely on embedding the weaving motion directly into the robot's path code. The weave path is typically implements in one of two ways either (1) the path planning software outputs a primary path with embedded "weave start" and "weave stop" commands, which are executed by the robot at the appropriate segments, or (2) the path planning software outputs a fully embedded "weave path," in which literal side-to-side motion is specified along the robot's path for execution. In many embodiments, either approach is compatible with a weave axis system.

In a start/stop code configuration (1), the robot follows the base path while the weave axis system executes weaving based on the start and stop signals, with no need for complex path augmentation or increased computational load. In a fully specified configuration (2), a software controller analyzes the fully embedded weave path and automatically assigns the gross positioning to the robot and the high-frequency weave motion to the weave axis system. Many embodiments are configured for a minimuminertia, minimum-swung-mass configuration in which each system performs the motion it is best suited for. In such configurations, the robot handles the larger-scale positioning, and the weave axis system executes the rapid, fine-scale weaving. In many embodiments, such a configuration can remove the need to program every oscillation as a robot path point and reduce the total number of motion commands which in many embodiments can result in improved part quality, precision, and repeatability.

In many embodiments, the weave axis system is configured to perform linear motion with high frequency and precision, which can result in controlled weaving operations without introducing motion artifacts caused by the inertia of the robotic actuator. In some embodiments, the weave axis system comprises a single linear degree of freedom, enabling straight-line oscillation of the welding head. In some embodiments, the weave axis system comprises two linear degrees of freedom, allowing for planar weaving patterns such as ellipses, zigzags, or sine waves. In many such embodiments, the configuration results in bidirectional control of the welding head within a defined plane. In many embodiments, the weave axis system is configured with three linear degrees of freedom, enabling volumetric weaving patterns. In many embodiments, the configuration produces controlled movement of the welding head within a bounded three-dimensional volume.

In many embodiments, the weave axis system can be an end effector assembly of a robot. In some embodiments, the robot can be a multi-axis robot. In some embodiments, the robot can be a 5-axis robot. In some embodiments, the robot can be a 6-axis robot. In some embodiments, the robot can have degrees of freedom of more than 6-axis. The weave axis system can achieve various weaving patterns automatically with the control of software. The weave axis systems in accordance with many embodiments are not mounted on a fixed track. The movement of the weave axis system is controlled by software and can be determined by the desired weaving patterns.

In some embodiments, the robot follows only a standard gross positioning path, such as a typical tool path without embedded weave instructions. In many such embodiments, the weaving motion is then overlaid onto this base path using an independent weave axis (weave axis system). In many embodiments, the weave axis system is mechanically and programmatically decoupled from the robot. In many embodiments, the weave axis system controller operates concurrently, applying high-frequency oscillations or weaving motions while the robot performs its slower positioning movements. In some embodiments, because the weave axis system operates independently from the main robot motion control, the weave patterns can be generated with greater frequency and precision. In many such embodiments, the weave axis system can produce greater frequency and precision without introducing excessive path points into the robot's program. In many embodiments, the weave axis system can modify existing parameters such as amplitude, frequency, and pattern in real time or between builds without altering the robot's positioning code. Additionally, in many embodiments, the weave axis system limits wear on the robot. In some embodiments, the weave axis system improves deposition consistency by isolating the high-speed weaving. In many embodiments, the weave axis system is a lighter and more responsive subsystem that reduces the burden on the robot.

In some embodiments, the weave axis system includes a centralized controller that orchestrates the coordination between the robot and the weave axis system. In some such embodiments, the centralized controller takes into account the physical constraints and performance characteristics of both systems, such as robot reach, joint stiffness, dynamic inertia, and weave axis system response rate. In many embodiments, the software dynamically adjusts both pathing and weaving to ensure optimized material deposition, precise motion synchronization, and minimal distortion. In many embodiments, by integrating real-time feedback and pre-characterized mechanical profiles, the controller may limit the robot velocity, such as by adjusting speeds at corners while maintaining continuous weave output from the weave axis system. In some embodiments, the weave axis system can adapt the weave amplitude based on local geometry or material heat buildup. In many embodiments, the weave axis system is configured as a harmonized dual system that achieves higher accuracy, efficiency, and part quality than robot-only or fixed-weave axis systems.

In many embodiments, the weave axis systems can achieve weaving amplitude of greater than or equal to about 10 microns. The weaving amplitude also refers to the width or the narrowest width of a weave pattern. In some embodiments, the weave axis systems can achieve weaving amplitude of greater than or equal to about 20 microns. In some embodiments the weave axis systems can achieve weaving amplitude of about 20 to 100 microns. In some embodiments the weave axis systems can achieve weaving amplitude of about 20 to 200 microns. In some embodiments the weave axis systems can achieve weaving amplitude of about 20 to 300 microns. In some embodiments the weave axis systems can achieve weaving amplitude of about 20 to 400 microns. In some embodiments the weave axis systems can achieve weaving amplitude of about 20 to 500 microns.

In many embodiments, the weave axis systems can achieve weaving accuracy of about 1 to 2 millimeters. In some embodiments, the weave axis systems can achieve weaving accuracy of greater than about 2 millimeters. In some embodiments, the weave axis systems can achieve weaving accuracy of less than about 1 millimeter. In some embodiments the weave axis systems can achieve weaving accuracy of about 2 to 10 millimeters. In some embodiments the weave axis systems can achieve weaving accuracy of about 2 to 20 millimeters. In some embodiments the weave axis systems can achieve weaving accuracy of about 2 to 30 millimeters. In some embodiments the weave axis systems can achieve weaving accuracy of about 2 to 40 millimeters. In some embodiments the weave axis systems can achieve weaving accuracy of about 2 to 50 millimeters.

In some embodiments, the weave axis system is capable of controlling weave motions at a very fine scale. In some such embodiments, the weave axis system can control the weave within the boundaries of the molten weld pool. In many embodiments, the weld pool scale level of precision allows the weave axis system to perform high-frequency and low-amplitude oscillations. In many such embodiments, the high-frequency and low-amplitude oscillations can influence and regulate the flow and solidification behavior of the molten metal during deposition. In many embodiments, by modulating the position of the printing head within the weld pool itself, the weave axis system can enhance the weld properties such as improved thermal uniformity, improved fusion quality, and more tightly controlled bead geometry. In many embodiments, the finely controlled weave motions of the weave axis system can reduce porosity, minimize residual stresses, and produce smoother surface finishes. In many embodiments, the weave axis system operates independently of the robot's primary structure. In many embodiments, the weave axis system is configured for weave control without being constrained by the robot's mechanical limitations or inertia.

The weave axis system is much lighter than conventional products and can successfully be used with a multi-axis robot. In many embodiments, the weave axis systems are lighter in weight compared to conventional automatic precision welding machines for industrial applications. The lighter weight of the systems enables them to be connected to the robot and the robot can still function properly. In various embodiments, a total weight of the weave axis system is less than or equal to about 50 pounds; or less than or equal to about 40 pounds; or less than or equal to about 35 pounds; or less than or equal to about 30 pounds; or less than or equal to about 25 pounds; or less than or equal to about 20 pounds. If attaching a conventional automatic welding machine (a total weight of about 100 pounds) to a robot arm, it can become too heavy for the robot to function properly in a prolonged time.

In many embodiments, the weave axis systems can greatly improve consistency of weaving from cell-to-cell and/or within a cell. The weave axis systems enable the use of a single printing code to print a feature across multiple cells to account for the robot-to-robot and/or pose-to-pose inconsistency. The weave axis systems can be implemented with different robots regardless of cell and/or pose. In several embodiments, the weave axis systems can achieve weaving patterns that were previously unavailable when weaving was controlled by moving the print head and the robot. In several embodiments, the weaving instructions are sent to the weave axis systems via software control directly. In some embodiments, the weaving instructions are no longer passing through the robot, which moves the weaving process away from having the robot control the print.

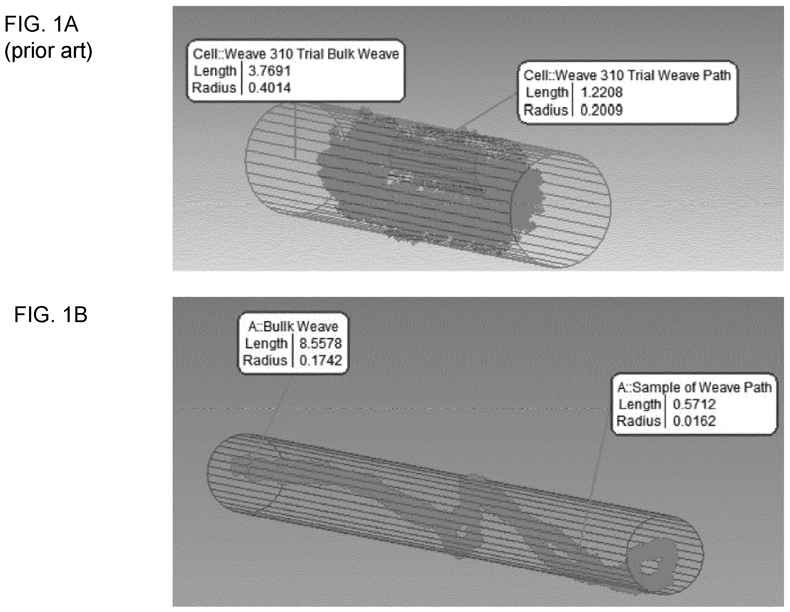

FIG. 1A illustrates robot paths when the robot is used to control the weave. FIG. 1A tracks a robot going through a weave pattern. The cylinder 102 represents the bounding box of the points that the robot is moving through. The cloud of blue dots 101 is the robot paths. The diameter of the weave pattern 102 is about 2 inches in FIG. 1A.

FIG. 1B illustrates robot paths when using the weave axis system in accordance with an embodiment. FIG. 1B tracks a robot going through a weave pattern. The cylinder 104 represents the bounding box of the points that the robot is moving through. The cloud of red dots 103 is the robot paths. The diameter of the weave pattern 104 is about 0.3 inches in FIG. 1B.

The robot path 103 when using the weave axis system is much more concise compared to the robot path 101. During a print, the robot tries to compensate the inputs of every motor so that it can reduce oscillating. But there's still enough flexure that the robot moves in the cloud fashion 101 and does not move in a straight line. The robot paths 101 in FIG. 1A show that the robot is jittering back and forth when trying to weave. The weave axis system shown in FIG. 1B can better control the weave and generate a more concise path that reflects the robot's actual path 103. The weave axis system in accordance with some embodiments can greatly improve the consistency of weaving. The weave axis system can generate weave patterns with a radius of about 0.15 inch, while the robot controlled weave has a radius of about 1 inch. To compensate for the inaccuracies shown in FIG. 1A, the printing systems without weave axis systems would need to change print parameters to achieve the weave patterns. The weave axis systems in accordance with many embodiments can achieve much more consistent weave patterns.

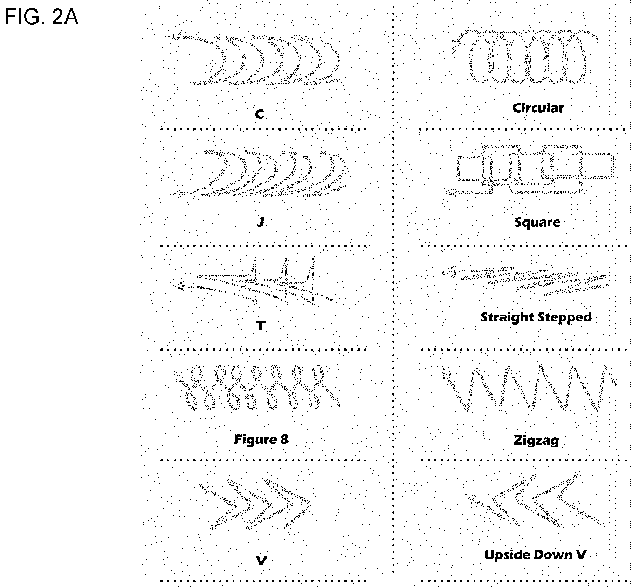

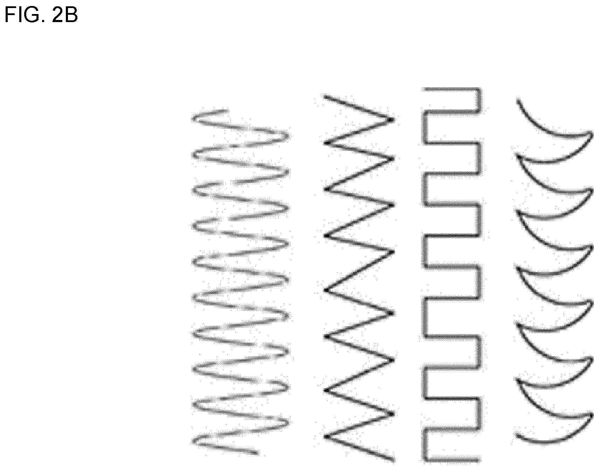

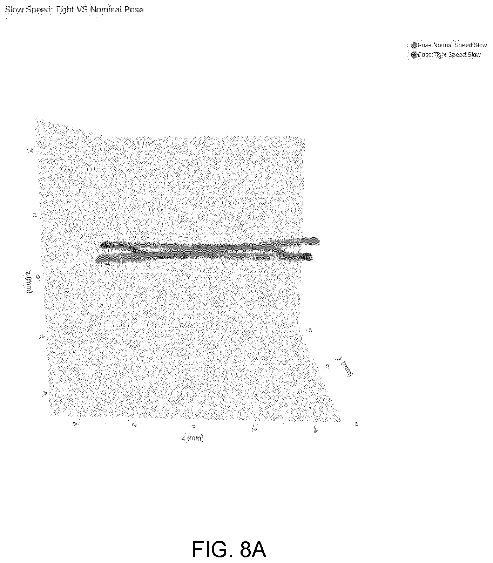

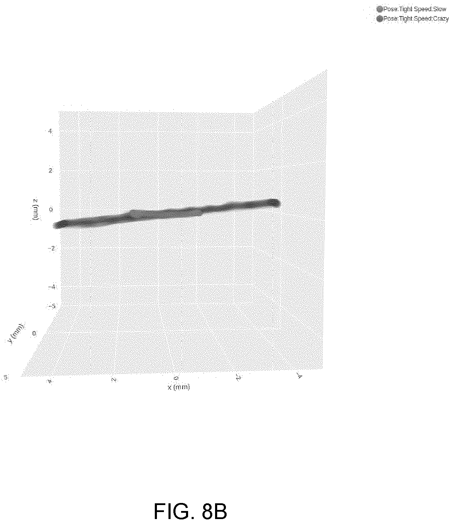

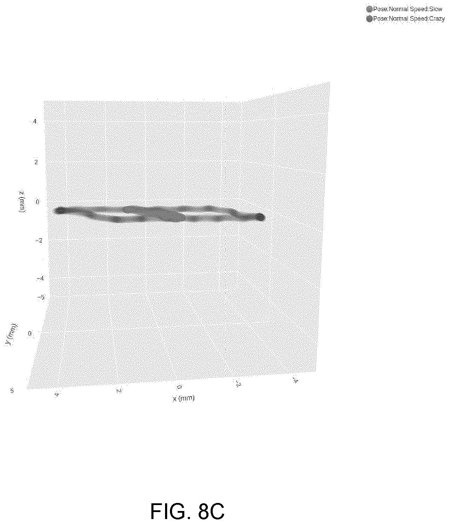

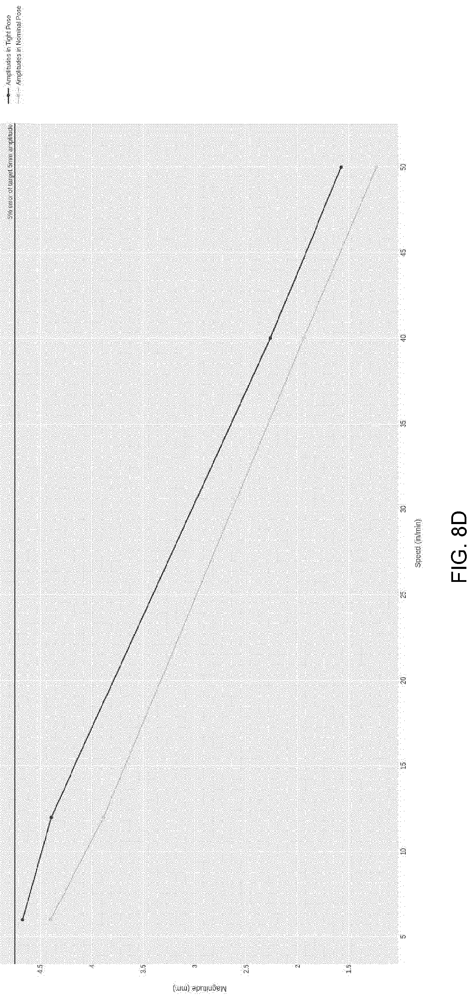

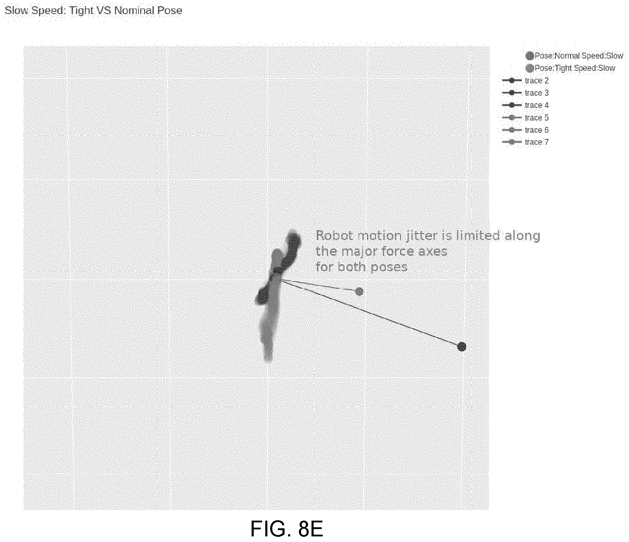

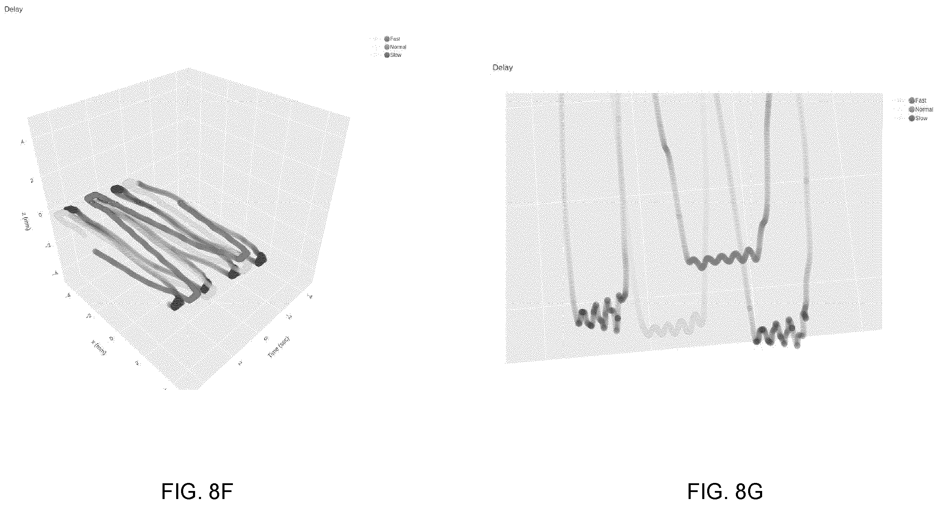

In many embodiments, the weave axis systems enable motion controls of the print. Motion controls enable control of the print speed instead of using one speed for the robot's weave. In various embodiments, the weave axis systems can achieve a variety of weaving patterns due to the motion control and the speed control. The speed can increase or decrease at different parts of the weave. FIG. 2A and FIG. 2B illustrate various weave patterns that can be achieved by the weave axis system in accordance with an embodiment. FIG. 2A illustrates weave patterns such as a C pattern, a J pattern, a T pattern, a Figure 8 pattern, a V pattern, a circular pattern, a square pattern, a straight stepped pattern, a zigzag pattern, an upside-down V pattern. FIG. 2B illustrates a sinusoidal pattern, a zigzag pattern, a stepped pattern, and a tooth pattern. Some embodiments implement a stepped weave pattern shown in FIG. 2B where the weave axis system can control the print speed to go slow at the edges and speed up in the middle. As can be readily appreciated, any of a variety of weave patterns, or a combination of weave patterns can be utilized as appropriate to the requirements of specific applications in accordance with various embodiments of the invention.

### The Weave Axis Systems

In many embodiments, the weave axis systems control print heads on various axes. In some embodiments, the weave axis systems can have controlled motion in one axis. In some embodiments, the weave axis systems can have controlled motion in two axes. In some embodiments, the weave axis systems can have controlled motion in three axes.

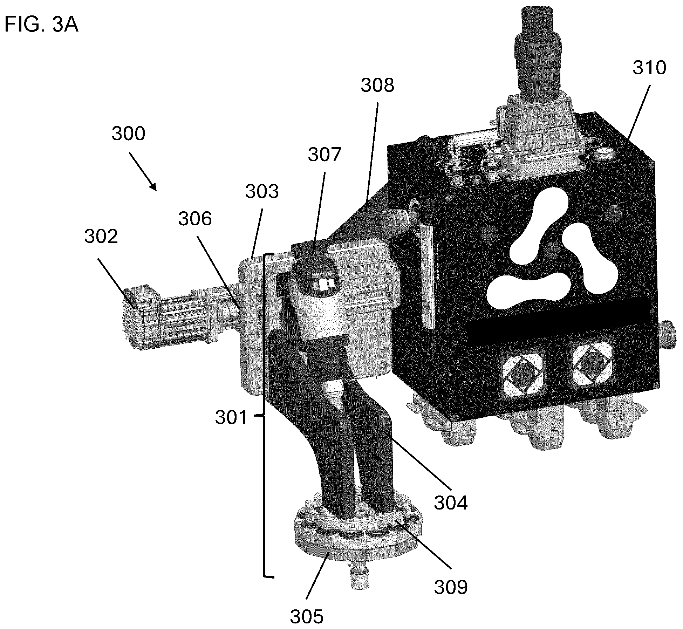

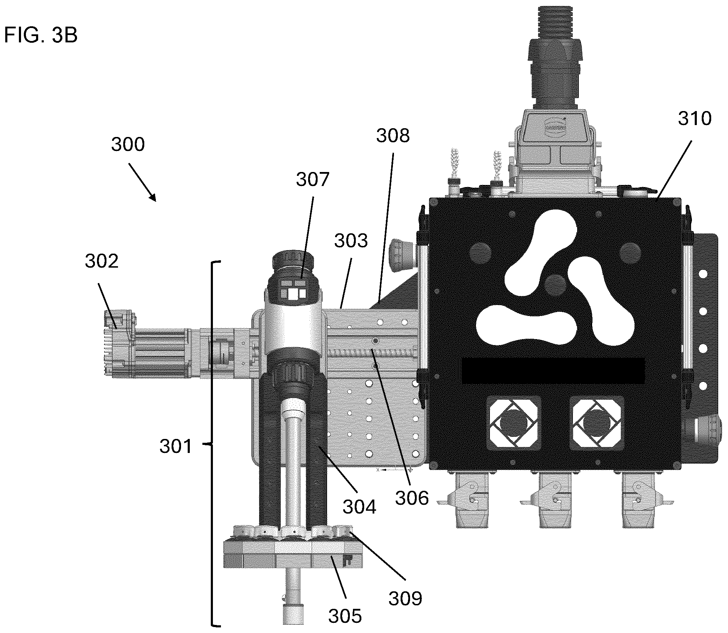

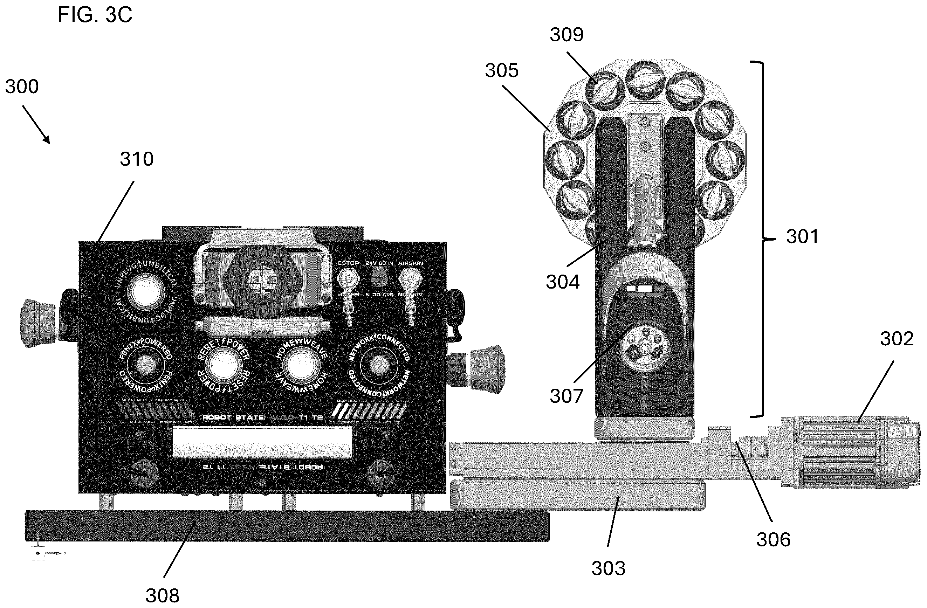

In several embodiments, a one axis weave axis system can be an end effector assembly to be mounted to a robotic actuator. FIG. 3A illustrates a side view of a weave axis system with one axis motion in accordance with an embodiment. FIG. 3B illustrates a front view of a weave axis system with one axis motion in accordance with an embodiment. FIG. 3C illustrates a top view of a weave axis system with one axis motion in accordance with an embodiment. The weave axis system allows for motion in one axis such as in bulk weave axial direction.

The one axis weave axis system 300 comprises a motor 302, a control assembly 310, a base plate 303, a rail 306, and an end effector 301. The end effector 301 can include riser plates 304, an interface plate 305, and an additive manufacturing applicator 307. The base plate 303 can be fixedly coupled to an additive manufacturing applicator 307 (e.g., a hot wire torch or a cold wire torch) at a base of the additive manufacturing applicator. Fixedly coupled can refer to a condition where parts are connected to prevent relative motion during operation and fixedly can include when those parts can simultaneously be removable. The riser plates 304 can be fixedly coupled to the base plate 303. The base plate 303 and the control assembly 310 can be fixedly coupled to a substrate plate 308. In various embodiments, the substrate plate 308 can be configured to connect to a robotic actuator. An interface plate 305 (e.g., a modular interface) can be mounted (e.g., fixedly) to the riser plate 304.

The interface plate 305 can include a set of connection points 309. The set of connection points 309 can be arranged circumferentially around a central axis. The connection points making up the set of connection points 309 can all lie on a plane; the plane can be referred to as a connection plane. The connections points 309 can all lie along the circumference of a connection circle on the connection plane. In various embodiments, a set of connection points 309 can include twelve connection points. As can be readily appreciated, any number of connection points can be included in the interface plate as appropriate to the requirements of specific applications in accordance with various embodiments of the invention. In some embodiments, each of the connection points can be configured to fixedly mount equipment. Connection point mountable equipment can include (but are not limited to) sensors, additive manufacturing applicators, and/or other equipment. In various embodiments, each of the equipment mounted on the interface plate can be the same or different. Examples of the additive manufacturing applicators can include (but are not limited to) hot torches and/or cold torches. Examples of sensors can be (but are not limited to) laser sensors, welding cameras, infrared cameras, visible light cameras, and/or sensors to measure geometric dimensions of the print part.

The motor 302 controls the axial movement of the end effector 301. The end effector 301 includes the riser plate 304, the additive manufacturing applicator 307, and the interface plate 305. In some embodiments, additional additive manufacturing applicators (not shown) can be mounted to the interface plate 305. The motor 302 can move the end effector 301 in an axial direction (such as the bulk weave axis direction) during printing to achieve the desired weave patterns. The movement of the end effector 301 is decoupled from the robotic actuator such that the end effector 301 has its own degree of freedom. The end effector assembly 300 can move the end effector 301 only during weaving.

The rail 306 can be fixedly coupled to the riser plate 304. The rail can lie on a plane parallel and offset by a plane defined by the base plate 303. The rail 306 can extend linearly towards the motor 302.

The control and coordination of the welding torches along the axis can be achieved via the control assembly 310. In many embodiments, the control assembly 310 can communicate between the robot and the path planning software. The path information can be generated and put onto the control assembly 310. The control assembly 310 dictates the welding and weaving movement.

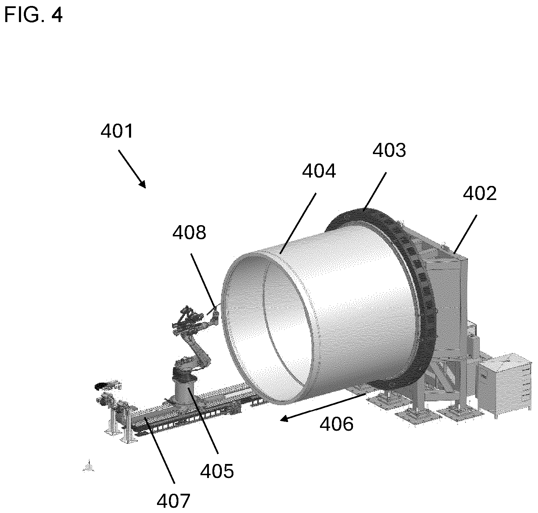

FIG. 4 illustrates a horizontal WAAM system implementing a weave axis system in accordance with an embodiment. The horizontal WAAM system 401 includes a build plate 403 that is oriented at a vertical direction and held by a positioner 402. (See, e.g., horizontal WAAM systems as described in U.S. Patent Publication No. 2024-0017340-A1 filed July 14, 2023, the disclosure of which is incorporated by reference.) The build plate 403 can be in a circular shape or any other shape that is applicable. During printing, the build plate 403 can rotate clockwise such that the print head can be held at a constant position. The rotation of the build plate 403 can be controlled via motors (not shown) in the positioner 402. A part 404 can be printed on the vertical build plate 403 during WAAM processes. The part 404 can be a cylindrical barrel. The build direction (or print direction) 406 is perpendicular to the build plate 403 and the part 404 extends horizontally. A multi axes robot 405 can be used for printing. A weave axis system 408 can be implemented as the end effector of the robot 405, where the end of the robot is pointing up. The weave axis system 408 can be any type of a weave axis system, such as a one axis system shown in FIGs. 3A - 3C, or a two axes system, or a three axes system. The robot 405 is held on a track 407 to be moved in a linear fashion. Although FIG. 4 shows that the robot 405 is held on a track 407, as can be readily appreciated, a robot 405 that is not controlled by a linear track 407, or a free moving robot 405 that is not controlled by a track can also be used. The weave axis system 408 (such as the one axis system 301) allows for motion in one axis (the bulk weave axis direction or part thickness direction). In the horizontal WAAM system 401, the bulk weave axis is in the radial direction of the cylindrical print part 404.

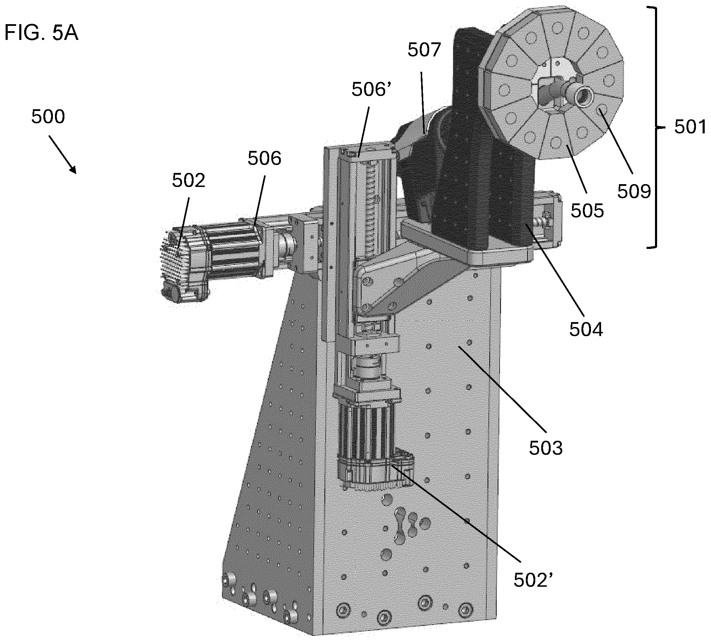

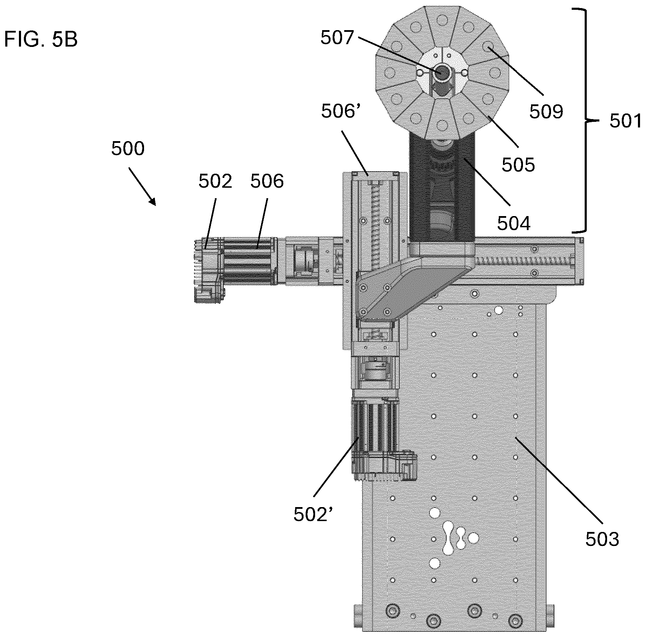

FIG. 5A illustrates a side view of a weave axis system with two axes motion in accordance with an embodiment. FIG. 5B illustrates a front view of a weave axis system with two axes motion in accordance with an embodiment. The weave axis system allows for weaving in the bulk weave axial direction and the direction of travel. The two axes weave axis system allows for the print head to move backwards due to the control of motion in two axes. The two axes weave axis system 500 comprises motors 502 and 502', a base plate 503, an end effector 501, and rails 506 and 506'. The end effector 501 can include a riser plate 504, an interface plate 505, and an additive manufacturing applicator 507. The base plate 503 can be fixedly coupled to an additive manufacturing applicator 507 (e.g., a hot wire torch or a cold wire torch) at a base of the additive manufacturing applicator. The riser plate 504 can be fixedly coupled to the base plate 503. In various embodiments, the base plate 503 can be configured to connect to a robotic actuator. An interface plate 505 (e.g., a modular interface) can be mounted (e.g., fixedly) to the riser plate 504.

The interface 505 can include a set of connection points 509. The set of connection points 509 can be arranged circumferentially around a central axis. The connection points making up the set of connection points 509 can all lie on a plane; the plane can be referred to as a connection plane. The connections points 509 can all lie along the circumference of a connection circle on the connection plane. In various embodiments, a set of connection points 509 can include twelve connection points. As can be readily appreciated, any number of connection points can be included in the interface plate as appropriate to the requirements of specific applications in accordance with various embodiments of the invention. In some embodiments, each of the connection points can be configured to fixedly mount equipment. Connection point mountable equipment can include (but are not limited to) sensors, additive manufacturing applicators, and/or other equipment. In various embodiments, each of the equipment mounted on the interface plate can be the same or different. Examples of the additive manufacturing applicators can include (but are not limited to) hot torches and/or cold torches. Examples of sensors can be (but are not limited to) laser sensors, welding cameras, infrared cameras, visible light cameras, and/or sensors to measure geometric dimensions of the print part.

The motors 502 and 502' control the axial movements of the end effector 501 in two directions. The end effector 501 includes the riser plate 504, the additive manufacturing applicator 507, and the interface plate 505. In some embodiments, additional additive manufacturing applicators (not shown) can be mounted to the interface plate 505. The motors 502 and 502' can move the end effector 501 in two axial directions (such as the bulk weave axis direction and the direction of travel) during printing to achieve the desired weave patterns. The movement of the end effector 501 is decoupled from the robotic actuator such that the end effector 501 has its own degree of freedom. The end effector assembly 500 can move the end effector 501 in two axial directions during weaving.

The rails 506 and 506' can be fixedly coupled to the riser plate 504. The rails can lie on a plane parallel and offset by a plane defined by the base plate 503. One rail 506 can extend linearly towards the motor 502. One rail 506' can extend linearly towards the interface plate 505.

The weave axis system with two-axes motion 500 can be implemented in the horizontal WAAM system shown in FIG. 4. The weave axis system 500 can be implemented as the end effector of the robot 405 to perform printing and weaving. In order to achieve the weaving patterns shown in FIGs. 2A and 2B, it will require reverse motion on the print path. As the robots 405 are not able to rotate backwards easily over time, and the weave axis system of one axis motion 300 can move the print head in the bulk weave axial direction only, it can be difficult to weave complex patterns with the one axis system. The weave axis system of two axes motion 500, instead, can move the print head in both the bulk weave axial direction and the direction of travel, the robot 405 position can stay constant, the build plate 403 can rotate clockwise, and the weave axis system 500 can move the print head counterclockwise slightly to allow for backwards movement of the print head relative to the part 404, as well as allowing for movement in the bulk weave axis. The movement in two directions allows for weaving the complex two-dimensional shapes shown in FIGs. 2A and 2B. Assigning motion to the weave axis system instead of the robot itself, eliminates the need for the robot to rotate backward or make minor compensating motions. The localized control over weaving in two directions facilitates efficient and precise execution of complex patterns without additional burden on the robot's movement.

Several embodiments implement the weave axis systems with three axes motion. The three axes weave axis systems allow for weaving in the bulk weave axial direction and the direction of travel, and controlling arc length (or the distance of the printing head from the part). In addition to controlling the motion in two axes, the three axes weave axis systems can move the print head closer or further from the print part.

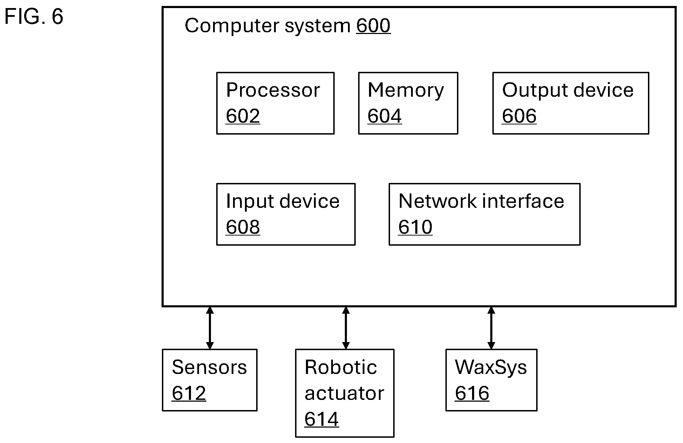

In several embodiments, a computer system can be used to store and execute instructions. An example computer system is conceptually illustrated in FIG. 6. The computer system 600 can include a processor 602, a memory 604, an output device 606, an input device 608, and a network interface 610. The computer system 600 can receive and/or send data from/to sensors 612, users and/or other sources. The computer system 600 can receive and/or send data from/to robotic actuator 614. The computer system 600 can receive and/or send data from/to the weave axis system 616. In several embodiments, the weave axis systems can be configured to control weaving during additive manufacturing processes. Computer systems can be configured to command the motors of the weave axis systems. Computer systems can be configured to run executable code. Executable code can be stored in memory.

The control and coordination of the print head among the multi axes can be achieved via software. In many embodiments, the software control can communicate between the robot and the path planning software. Some embodiments use the IPC (Industrial PC) to control the motor of the weave axis system. The IPC is the industrial computer that runs the cell. In certain embodiments, the path information can be generated and put onto the IPC and IPC pushes information out to the robot, as well as to the weave axis system directly. In other embodiments, the path information can be generated and put onto the IPC and IPC pushes information out to the robot, and the robot pushes information to the weave axis system. The robot handles the welding power supplies. The IPC is also able to control other things in the cell. (See, e.g., software control systems described in U.S. Provisional Patent Application No. 63/552,610 filed February 12, 2024, the disclosure of which is incorporated by reference.)

In many embodiments, the weave axis systems enable better sensor data collection. Several embodiments use various sensors to monitor the print. In some embodiments, sensors such as the gocators can be used to measure the thickness of the print at any given point. Without using the weave axis systems, the gocator sensors need to be moved during the print to measure the thickness. The weave axis systems make it possible not to move the sensors during print to measure the part thickness. The weave axis systems provide a stationary mounting location for the sensors, which will improve data collection from such sensors.

The weave axis systems in accordance with many embodiments provide consistent results in the thickness direction. In several embodiments, the weave axis systems can result in more consistent parasitic mass. The weave axis systems can also improve cell-to-cell consistency and intracell consistency pose-to-pose. For a given part, the weave axis system can achieve the same weaving results wherever the robot is in a pose, regardless of what cell the robot is using.

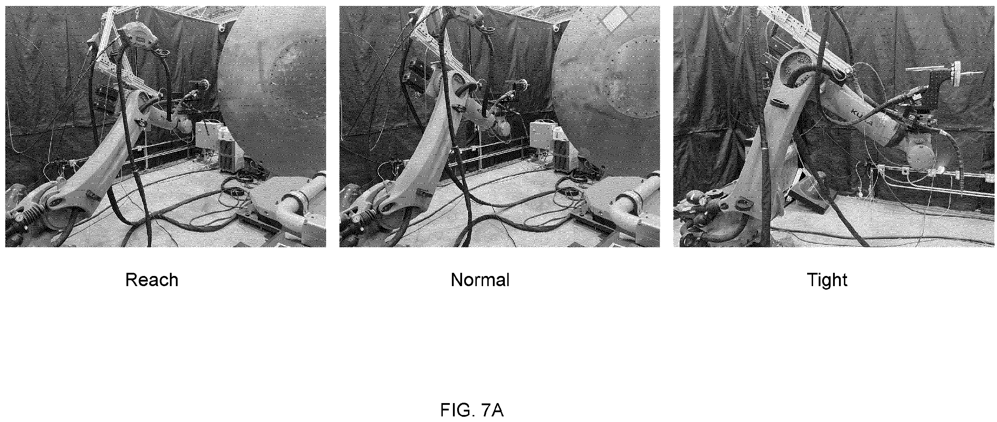

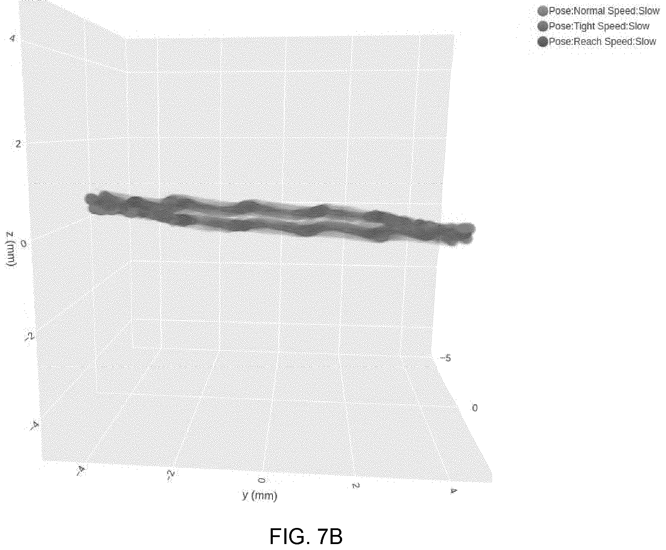

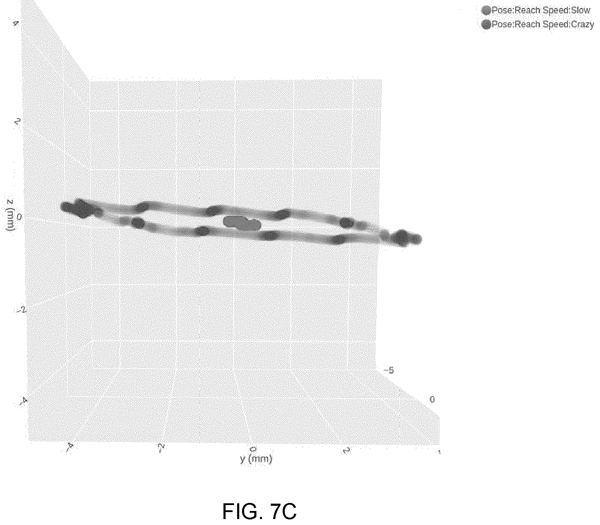

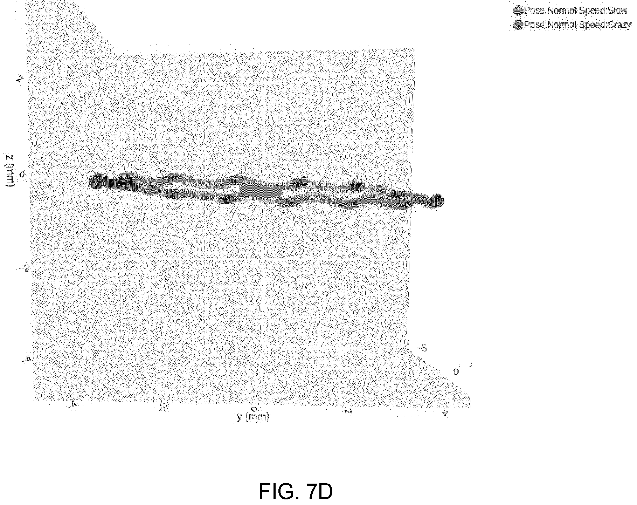

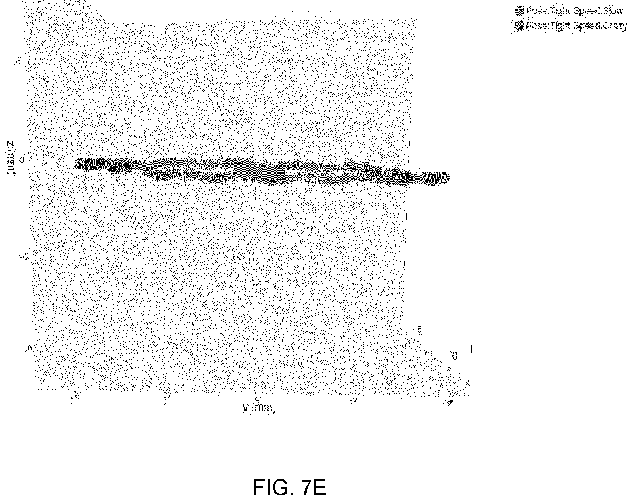

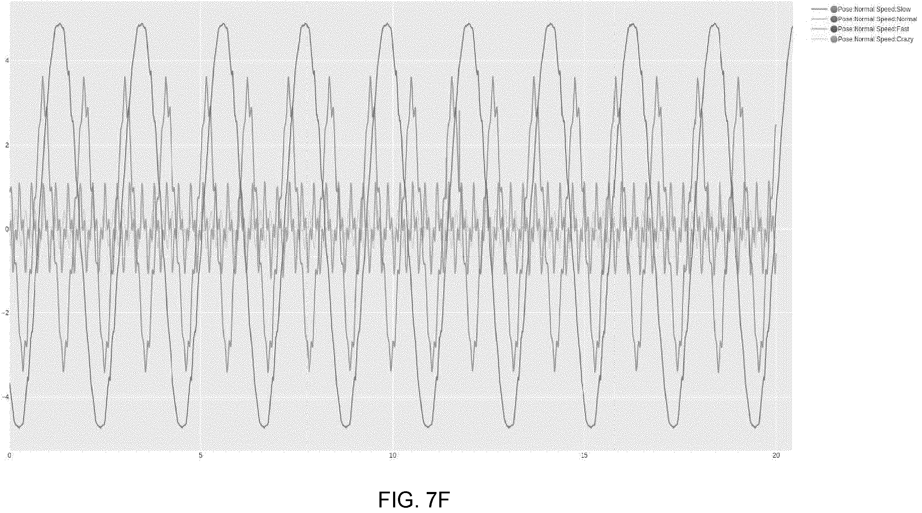

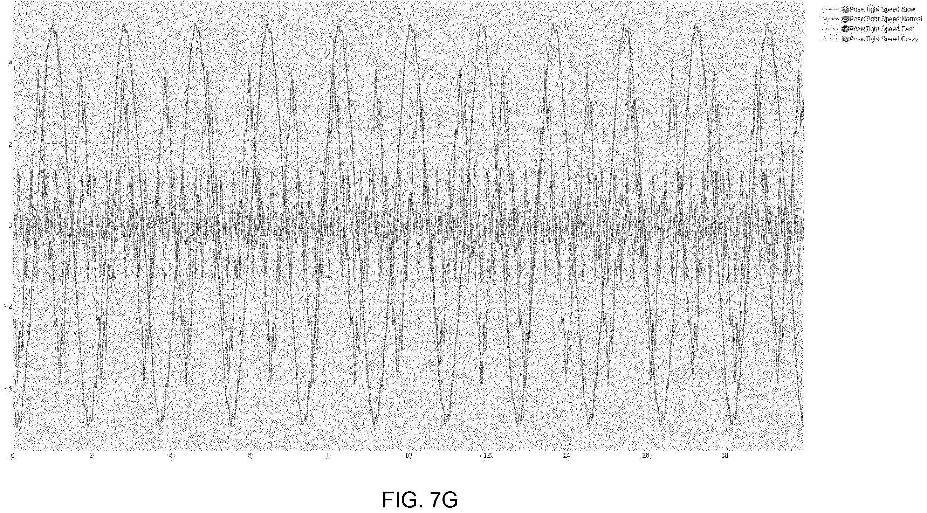

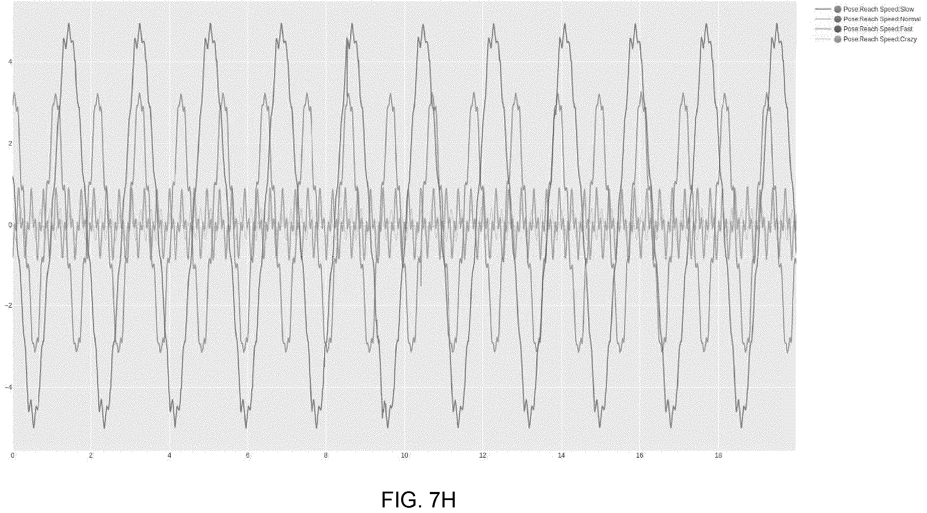

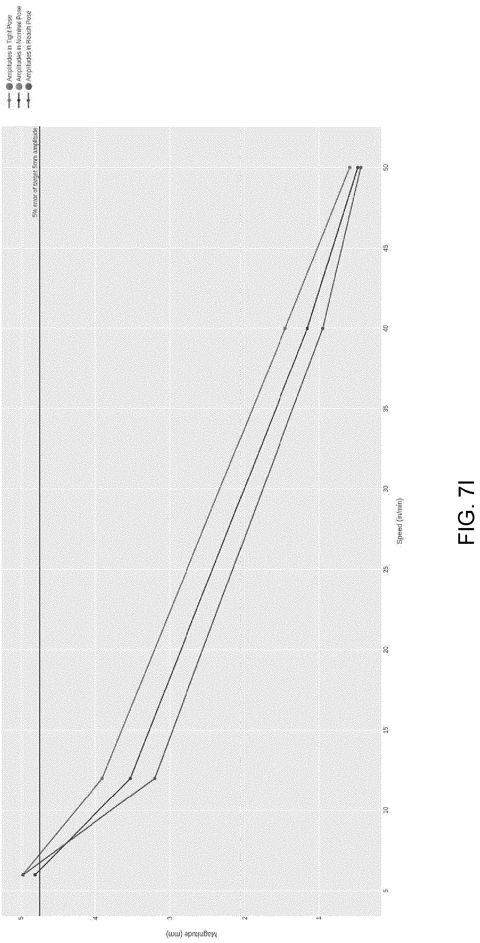

FIG. 7A illustrates the robot in a normal pose, a reach pose, and a tight pose. FIGs. 7B through 7I illustrate weaving at various weave speeds and poses in accordance with an embodiment. In particular, FIGs. 7B through 7I illustrate weaving using sinusoidal weave trajectories. For all figures, the robot was commanded to execute a weave amplitude of about 5 mm. The slow speed is at about 6 in/min. The normal speed is at about 12 in/min. The fast speed is at about 40 in/min. The very fast speed is at about 50 in/min. FIG. 7B illustrates the weave axis system moving at slow speed in the three different poses. FIG. 7C illustrates the weave axis system at the reach pose moving at slow speed and at very fast speed. FIG. 7D illustrates the weave axis system at the normal pose moving at slow speed and at very fast speed. FIG. 7E illustrates the weave axis system at the tight pose moving at slow speed and at very fast speed. FIG. 7F illustrates the weave axis system at the normal pose moving at slow speed, at normal speed, at fast speed, and at very fast speed. FIG. 7G illustrates the weave axis system at the tight pose moving at slow speed, at normal speed, at fast speed, and at very fast speed. FIG. 7H illustrates the weave axis system at the reach pose moving at slow speed, at normal speed, at fast speed, and at very fast speed. FIG. 7I illustrates amplitude at the normal pose, the reach pose, and the tight pose moving at slow speed, at normal speed, at fast speed, and at very fast speed.

FIGs. 8A through 8G illustrate weaving at various weave speeds and poses of the weave axis system in accordance with an embodiment. FIG. 8A illustrates the weave axis system moving at slow speed in normal pose and the tight pose. The robot accuracy and maneuverability should improve as the pose is less extended "tighter", the red plot shows a more consistent trajectory appearing as a line. The data captured from the nominal pose shows poor tracking and a steady state error is present for forward and reverse paths of the trajectory.

FIG. 8B illustrates the weave axis system moving at slow speed and at very fast speed in the tight pose. A visible shrinking of the endpoints of triangle trajectory results in the weave progressively deviating from its intended endpoints. The slow trajectory plotted in red can be considered best. FIG. 8C illustrates the weave axis system moving at slow speed and at very fast speed in the normal pose. A similar decay is observed as shown in FIG. 8B.

FIG. 8D illustrates weave amplitude as a function of print speed and robot pose. The pose accounts for a consistent deviation between observed weave amplitude and the target weave amplitude of 5 mm. The weave speed produces a dominating source of error which scales directly with speed. From the graph above it appears that the robot is incapable of executing a triangular weave at either of the poses tested. This is not too surprising because the robot stability to track a trajectory will always deviate from ideal since the robot is incapable of infinite acceleration/joint torques, this means the robot will round sharp turns in the commanded trajectory. These weave trajectories are triangular thus at any speed are sensitive to robot smoothing errors.

FIG. 8E illustrates the weave axis system moving at slow speed in the tight pose and in the normal pose. This plot highlights the importance of aligning the major force axis for the manipulator at a given pose, such if the robot is used for weaving otherwise the output trajectory is sensitive to errors in the less controlled dimensions.

FIGs. 8F and 8G illustrate weaves in normal pose with a half second delay at each point along the triangular weave. The error response is visible in this data since the robot is being commanded to wait at a position for half a second, the settling time and overshoot clear to see.

### DOCTRINE OF EQUIVALENTS

This description of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications. This description will enable others skilled in the art to best utilize and practice the invention in various embodiments and with various modifications as are suited to a particular use. The scope of the invention is defined by the following claims.

As used herein, the singular terms "a," "an," and "the," may include plural referents unless the context clearly dictates otherwise. Reference to an object in the singular is not intended to mean "one and only one" unless explicitly so stated, but rather "one or more."

As used herein, the terms "approximately" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0. 1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. Where ranges are described, the range should be understood to include the endpoints of the ranges, and the endpoints of such ranges are also contemplated to stand on their own as inventive, individual data points and to form the endpoints of other ranges. For example, a ratio in the range of about 1 to about 200 should be understood to include the explicitly recited limits of about 1 and about 200, but also to include individual ratios such as about 2, about 3, and about 4, sub-ranges such as about 1 to about 10, about 10 to about 50, about 20 to about 100, about 100 to about 200, and so forth, and related ranges such as greater than about 1 or less than about 200.

### Example Clauses

Examples are set out in the following clauses:
1. An additive manufacturing system, comprising:
   a robotic actuator; and
   an end effector assembly configured with at least one effector degree of freedom
      mounted to the robotic actuator with a plurality of actuator degrees of freedom, the end effector assembly comprising:
         an end effector, the end effector comprising a welding torch, with an end point of the welding torch positioned proximal to an end effector central axis;
         at least one motor configured to drive a movement of the end effector along the at least one effector degree of freedom;
      wherein the movement of the end effector is decoupled from a movement of the robotic actuator and the plurality of actuator degrees of freedom; and
      wherein the movement of the end effector along at least one axis is driven by the at least one motor independent of a movement of the robotic actuator such that the at least one effector degree of freedom is independent from each of the plurality of actuator degrees of freedom;
      wherein the end effector assembly is configured for a bulk weave pattern along a bulk weave effector degree of freedom, and wherein the bulk effector degree of freedom comprises linear axis corresponding to a bulk weave axial direction.
2. The system of clause 1, wherein the end effector further comprises a modular interface, the modular interface comprising a plurality of connection points arranged around a perimeter of a central axis of the modular interface.
3. The system of clause 1 or 2, wherein the end effector assembly is configured to print a plurality of weave patterns with an accuracy of less than 10 millimeters.
4. The system of any preceding clause, wherein the end effector assembly further comprises at least one rail, and the at least one motor drives the movement of the end effector along the at least one rail.
5. The system of any preceding clause, wherein the end effector assembly has a degree of freedom along a first axis, the first axis corresponding to a bulk weave axial direction, and a degree of freedom along a second axis, the second axis corresponding to a second axial direction wherein the second axial direction is a direction of travel of a print part of the additive manufacturing system.
6. The system of clause 4, wherein the end effector assembly comprises a plurality of rails and a plurality of motors wherein each of the plurality of motors drives the movement of the end effector along one of the plurality of rails.
7. The system of any preceding clause, wherein the end effector assembly has degrees of freedom on three axes, wherein a first axial direction is a bulk weave axial direction, a second axial direction is a direction of travel of a print part of the additive manufacturing system, and a third axial direction is a distance between the welding torch and a print part of the additive manufacturing system.
8. The system of any of clauses 2 to 7, when appendant to clause 2, wherein the welding torch is a hot wire torch comprising:
   a hot wire torch endpoint; and
   one or more sensors fixedly attached to the plurality of connection points;
   wherein the one or more sensors are configured to generate data based on observations of an observation position offset relative to the hot wire torch endpoint.
9. The system of any of clauses 2 to 8, when appendant to clause 2, wherein the plurality of connection points are configured to couple with at least one device selected from the group consisting of: a hot wire torch, a cold wire torch, a sensor, a camera, a tool, a welding camera, an infrared camera, a visible light camera, a laser sensor, and a sensor to measure a geometrical dimension of a part.
10. The system of any preceding clause, wherein the robotic actuator is configured to follow a primary tool path, and the end effector assembly is configured to overlay a weave pattern onto the primary tool path independent of the movement of the robot actuator; and
   wherein the weave pattern is driven by the at least one motor of the end effector assembly without altering the primary tool path of the robotic actuator.
11.The system of any preceding clause, wherein the end effector assembly further comprises a control assembly, the control assembly comprising:
   memory; and
   a processor, the processor is configured to receive a set of print instructions for weaving from the memory, send the set of print instructions to the end effector assembly and cause the at least one motor to drive the end effector assembly.
12.The system of clause 11, wherein the processor is further configured to receive tool path data for the robotic actuator, receive weaving parameters for the end effector assembly and coordinate the movement of the robotic actuator and the movement of the end effector assembly.
13.The system of clause 12, wherein the movement of the robotic actuator and the movement of the end effector assembly are configured for a material deposition property.
14.The system of clause 13, wherein the material deposition property is selected from the group consisting of:
   a material distribution, a material fusion, a fusion uniformity, and a weld bead geometry.
15.The system of any of clauses 11 to 14, wherein the processor is further configured to modulate at least one of a weave amplitude or a weave frequency based on a state of the additive manufacturing system.
16.The system of clause 15, wherein the state is selected from the group consisting of:
   a pose, a path position, an articulation, a thermal state, a part geometry, and a mechanical characteristic of the additive manufacturing system.
17. An end effector assembly for an additive manufacturing system, comprising:
   an end effector with a welding torch, the welding torch having an end point positioned proximal to an end effector central axis;
   at least one motor configured to control a movement of the end effector;
   wherein the movement of the end effector is independent from a movement of a robotic actuator coupled to the end effector assembly; and
   wherein the end effector is configured with at least one effector degree of freedom that is independent from each of a plurality of actuator degrees of freedom.
18.The end effector assembly of clause 17 further comprising a modular interface with a plurality of connection points arranged around a perimeter of a modular interface central axis.
19.The end effector assembly of clause 18, wherein the plurality of connection points are configured to couple with at least one device selected from the group consisting of:
   a hot wire torch, a cold wire torch, a sensor, a camera, a tool, a welding camera, an infrared camera, a visible light camera, a laser sensor, and a sensor to measure a geometrical dimension of a part.
20.An additive manufacturing system comprising:
   a robotic actuator; and
   an end effector assembly coupled to the robotic actuator, the end effector assembly comprising:
      a welding torch configured to deposit material forming a part;
      at least one motor configured to drive the welding torch along at least one effector axis independent from any movement of the robotic actuator;
      wherein the at least one effector axis comprises a linear axis corresponding to a bulk weave axial direction;
      wherein the end effector assembly is configured to perform a weave motion having an amplitude within a molten weld pool during deposition; and
      wherein the weave motion is configured for a weld property.
21.The additive manufacturing system of clause 20, wherein the weld property is selected from the group consisting of:
   a material distribution, a material fusion, a fusion uniformity, and a weld bead geometry.
22. A method of performing additive manufacturing, comprising:
   coupling an end effector assembly to a robotic actuator wherein the end effector assembly comprises:
      an end effector with a welding torch, the welding torch having an end point positioned proximal to an end effector central axis;
      at least one motor configured to control a movement of the end effector;
      wherein the movement of the end effector is independent from a movement of the robotic actuator coupled to the end effector assembly; and
      wherein the end effector is configured with at least one effector degree of freedom comprising a linear axis in a bulk weave axial direction and is independent from each of a plurality of actuator degrees of freedom;
   positioning a welding torch of the end effector assembly along a print path using the robotic actuator;
   driving the at least one motor of the end effector assembly to perform an oscillatory weave motion with an amplitude and a frequency along the bulk weave axial direction;
   controlling the weave motion independent of the movement of the robotic actuator; and
   modulating at least one weave parameter to improve a weld property.
23. The method of clause 22, wherein the weld property is selected from the group consisting of:
   a material distribution, a material fusion, a fusion uniformity, and a weld bead geometry.

## Claims

1. An end effector assembly for an additive manufacturing system, comprising:
an end effector with a welding torch, the welding torch having an end point positioned proximal to an end effector central axis;
at least one motor configured to control a movement of the end effector;
wherein the movement of the end effector is independent from a movement of a robotic actuator coupled to the end effector assembly; and
wherein the end effector is configured with at least one effector degree of freedom that is independent from each of a plurality of actuator degrees of freedom.

2. The end effector assembly of claim 1 further comprising a modular interface with a plurality of connection points arranged around a perimeter of a modular interface central axis.

3. The end effector assembly of claim 2, wherein the plurality of connection points are configured to couple with at least one device selected from the group consisting of:
a hot wire torch, a cold wire torch, a sensor, a camera, a tool, a welding camera, an infrared camera, a visible light camera, a laser sensor, and a sensor to measure a geometrical dimension of a part.

4. The end effector assembly of claim 2 or 3, wherein the welding torch is a hot wire torch comprising:
a hot wire torch endpoint; and
one or more sensors fixedly attached to the plurality of connection points;
wherein the one or more sensors are configured to generate data based on observations of an observation position offset relative to the hot wire torch endpoint.

5. The end effector assembly of any preceding claim, wherein the end effector assembly is configured to print a plurality of weave patterns with an accuracy of less than 10 millimeters.

6. The end effector assembly of any preceding claim, wherein at least one of:
the end effector assembly further comprises at least one rail, and the at least one motor drives the movement of the end effector along the at least one rail; and
the end effector assembly comprises a plurality of rails and a plurality of motors wherein each of the plurality of motors drives the movement of the end effector along one of the plurality of rails.

7. An additive manufacturing system, comprising:
a robotic actuator; and
an end effector assembly according to any preceding claim, the end effector assembly being mounted to the robotic actuator, the robotic actuator having a plurality of actuator degrees of freedom,
wherein the movement of the end effector along at least one axis is driven by the
at least one motor independent of a movement of the robotic actuator such that the at least one effector degree of freedom is independent from each of the plurality of actuator degrees of freedom;
wherein the end effector assembly is configured for a bulk weave pattern along a bulk weave effector degree of freedom, and wherein the bulk weave effector degree of freedom comprises a linear axis corresponding to a bulk weave axial direction.

8. The system of claim 7, wherein at least one of:
the end effector assembly has a degree of freedom along a first axis, the first axis corresponding to a bulk weave axial direction, and a degree of freedom along a second axis, the second axis corresponding to a second axial direction wherein the second axial direction is a direction of travel of a print part of the additive manufacturing system; and
the end effector assembly has degrees of freedom on three axes, wherein a first axial direction is a bulk weave axial direction, a second axial direction is a direction of travel of a print part of the additive manufacturing system, and a third axial direction is a distance between the welding torch and a print part of the additive manufacturing system.

9. The system of claim 7 or 8, wherein the robotic actuator is configured to follow a primary tool path, and the end effector assembly is configured to overlay a weave pattern onto the primary tool path independent of the movement of the robotic actuator; and
wherein the weave pattern is driven by the at least one motor of the end effector assembly without altering the primary tool path of the robotic actuator.

10. The system of any claims 7 to 9, wherein the end effector assembly further comprises a control assembly, the control assembly comprising:
memory; and
a processor, the processor is configured to receive a set of print instructions for weaving from the memory, send the set of print instructions to the end effector assembly and cause the at least one motor to drive the end effector assembly.

11. The system of claim 10, wherein the processor is further configured to receive tool path data for the robotic actuator, receive weaving parameters for the end effector assembly and coordinate the movement of the robotic actuator and the movement of the end effector assembly.

12. The system of claim 11, wherein the movement of the robotic actuator and the movement of the end effector assembly are configured for a material deposition property, wherein optionally the material deposition property is selected from the group consisting of: a material distribution, a material fusion, a fusion uniformity, and a weld bead geometry.

13. The system of any of claims 10 to 12, wherein the processor is further configured to modulate at least one of a weave amplitude or a weave frequency based on a state of the additive manufacturing system, wherein optionally the state is selected from the group consisting of: a pose, a path position, an articulation, a thermal state, a part geometry, and a mechanical characteristic of the additive manufacturing system.

14. The system of any of claims 7 to 13, wherein the end effector assembly is configured to perform a weave motion having an amplitude within a molten weld pool during deposition of material by the welding torch, and wherein the weave motion is configured for a weld property.

15. A method of performing additive manufacturing, comprising:
coupling an end effector assembly to a robotic actuator wherein the end effector assembly comprises:
an end effector with a welding torch, the welding torch having an end point positioned proximal to an end effector central axis;
at least one motor configured to control a movement of the end effector;
wherein the movement of the end effector is independent from a movement of the robotic actuator coupled to the end effector assembly; and
wherein the end effector is configured with at least one effector degree of freedom comprising a linear axis in a bulk weave axial direction and is independent from each of a plurality of actuator degrees of freedom;
positioning a welding torch of the end effector assembly along a print path using the robotic actuator;
driving the at least one motor of the end effector assembly to perform an oscillatory weave motion with an amplitude and a frequency along the bulk weave axial direction;
controlling the weave motion independent of the movement of the robotic actuator; and
modulating at least one weave parameter to improve a weld property.
